# EUROPEAN PATENT SPECIFICATION

(11) **EP 3 903 043 B1**
(45) Date of publication and mention of the grant of the patent: **25.10.2023**
(21) Application number: 20748510.3
(22) Date of filing: 29.01.2020
(51) Int. Cl.: F24F 1/34, F24F 1/30, F24F 1/40, F16B 2/06, F16B 2/14, F24F 11/46, F24F 11/84, F25B 41/31, F24F 1/46

(54) **OUTDOOR UNIT OF AIR CONDITIONER**
AUSSENEINHEIT EINER KLIMAANLAGE
UNITÉ EXTÉRIEURE DE CLIMATISEUR

(30) Priority: 31.01.2019 KR 20190012968
(43) Date of publication of application: 03.11.2021
(73) Proprietor: Samsung Electronics Co., Ltd., Suwon-si, Gyeonggi-do 16677 (KR)
(72) Inventor: KIM, Mun Sub, Suwon-si Gyeonggi-do 16677 (KR); KIM, You Jae, Suwon-si Gyeonggi-do 16677 (KR); KIM, Hyun Ho, Suwon-si Gyeonggi-do 16677 (KR); SEO, Hyeong Joon, Suwon-si Gyeonggi-do 16677 (KR); JUNG, Du Han, Suwon-si Gyeonggi-do 16677 (KR)
(74) Representative: Gulde & Partner
(86) International application number: PCT/KR2020/001331
(87) International publication number: WO 2020/159215

(56) References cited:
- EP-A1- 3 048 390
- EP-A2- 2 365 253
- CN-U- 203 837 207
- CN-U- 205 090 680
- JP-A- H1 096 540
- JP-A- H09 196 515
- KR-U- 19980 012 019
- US-A- 5 547 322
- US-A1- 2009 056 357
- US-A1- 2011 219 803
- US-A1- 2018 003 420

## Description

### [Technical Field]

The invention relates to an outdoor unit of an air conditioner having an expansion valve unit.

### [Background Art]

In general, an air conditioner is a device including a refrigeration cycle, and the type of the air conditioner includes a split type air conditioner including an indoor unit arranged in an indoor space and an outdoor unit arranged in an outdoor space.

The outdoor unit of the air conditioner includes an outdoor heat exchanger for exchanging heat with outdoor air, a compressor for compressing the refrigerant, an expansion valve unit for decompressing the refrigerant, and a housing for accommodating the outdoor heat exchanger, the expansion valve unit, and the compressor.

The expansion valve unit additionally includes a capillary tube to optimize the flow rate of the refrigerant, and the tube of the capillary tube is formed thin, which causes a risk of damage. EP 2365253 A2 discloses an outdoor unit of an air conditioner including a bracket to support an expansion valve unit.

### [Disclosure]

### [Technical Problem]

It is an aspect of the invention to provide an outdoor unit of an air conditioner capable of stably fixing an expansion valve unit so as to prevent damage to the expansion valve unit.

### [Technical Solution]

According to the invention, an outdoor unit of an air conditioner connectable to an indoor unit is provided as defined in claim 1.

The expansion valve may be fixed to one side of the bracket, and the one of the first connection portion or the second connection portion may be fixed to the other side of the bracket.

The capillary tube may include one end thereof connected to the connection tube and the other end thereof connected to the expansion valve, and the bracket may fix the expansion valve and the connection tube to maintain a separation distance in a direction perpendicular to an extending direction of the one end and the other end of the capillary tube.

The outdoor unit of the air conditioner may further include a first coupling member configured to surround at least a portion of the expansion valve and coupled to the bracket so as to allow the expansion valve to be coupled to the bracket.

The first coupling member may include a rubber material.

The first coupling member may include a first cutout portion, a first support configured to support at least one portion of the expansion valve after a lower end of the expansion valve is inserted through the first cutout portion, and a first coupling portion extending from the first cutout portion and then coupled to the bracket.

The first coupling portion may include a support protrusion configured to allow the first coupling portion to be supported by the bracket without being separated from the bracket after the first coupling portion is inserted into the bracket.

The bracket may include a coupling hook including an insertion portion to which the first coupling portion is inserted.

The coupling hook may be arranged at one side end of the bracket.

The outdoor unit of the air conditioner may further include a second coupling member configured to surround one of the first connection portion or the second connection portion and coupled to the bracket so as to allow the one of the first connection portion or the second connection portion to be coupled to the bracket.

The second coupling member may include a second support configured to surround the one of the first connection portion or the second connection portion and support the one of the first connection portion or the second connection portion, and a second coupling portion coupled to the bracket.

The second coupling portion may be screwed to the bracket, and the bracket may further include a coupling hole to which the second coupling portion is screwed.

### [Advantageous Effects]

The expansion valve unit of the outdoor unit of the air conditioner may be stably supported by the bracket, without the movement, and thus it is possible to effectively prevent the capillary tube, which is arranged in the front end or the rear of the expansion valve unit, from being damaged.

### [Description of Drawings]

FIG. 1 is a schematic diagram of an air conditioner according to an embodiment of the invention;
FIG. 2 is an exploded perspective view of an outdoor unit of the air conditioner according to an embodiment of the invention;
FIG. 3 is a perspective view illustrating a state in which an expansion valve unit is fixed to a bracket in the air conditioner according to an embodiment not part of the invention;
FIG. 4 is a perspective view of the expansion valve unit in the air conditioner according to an embodiment of the invention;
FIG. 5 is an exploded perspective view illustrating a first coupling member, a second coupling member, and the bracket in the air conditioner according to an embodiment of the invention;
FIG. 6 is a view illustrating one surface of the bracket in a state in which the expansion valve unit is fixed to the bracket, in the air conditioner according to an embodiment of the invention;
FIG. 7 is a view illustrating the other surface of the bracket in a state in which the expansion valve unit is fixed to the bracket, in the air conditioner according to an embodiment of the invention;
FIG. 8 is a schematic diagram of an air conditioner according to another embodiment of the invention; and
FIG. 9 is a view illustrating one surface of a bracket in a state in which an expansion valve unit is fixed to the bracket, in the air conditioner according to another embodiment of the invention.

### [Best Mode]

In addition, the same reference numerals or signs shown in the drawings of the disclosure indicate elements or components performing substantially the same function.

The singular forms "a", "an" and "the" are intended to include the plural forms as well, unless the context clearly indicates otherwise. The terms "including", "having", and the like are used to specify features, numbers, steps, operations, elements, components, or combinations thereof, but do not preclude the presence or addition of one or more of the features, elements, steps, operations, elements, components, or combinations thereof. It will be understood that, although the terms first, second, third, etc., may be used herein to describe various elements, but elements are not limited by these terms. These terms are only used to distinguish one element from another element. For example, without departing from the scope of the invention as defined in the claims, a first element may be termed as a second element, and a second element may be termed as a first element. The term of "and / or" includes a plurality of combinations of relevant items or any one item among a plurality of relevant items.

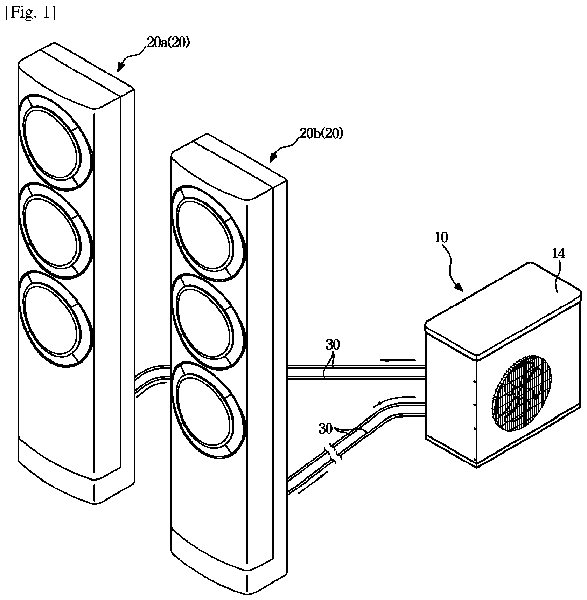

The term of "upper side", "upward", "lower side", and "downward" used in the description may be defined by the up and down direction of the outdoor unit of the air conditioner according to an embodiment, as illustrated in FIG. 1. That is, a side corresponding to an upper side of a heat exchanger of FIG. 1 represents an upper side, and a side corresponding to a lower side of the heat exchanger of FIG. 1 represents a lower side.

In addition, as for the term "front side" and "rear side" used in the description, a direction, to which a front surface of the heat exchanger according to an embodiment of FIG. 1 is directed, represents "front side" and a direction, to which a rear surface of the heat exchanger is directed, represents "rear side".

Hereinafter the invention will be described more fully with reference to the accompanying drawings.

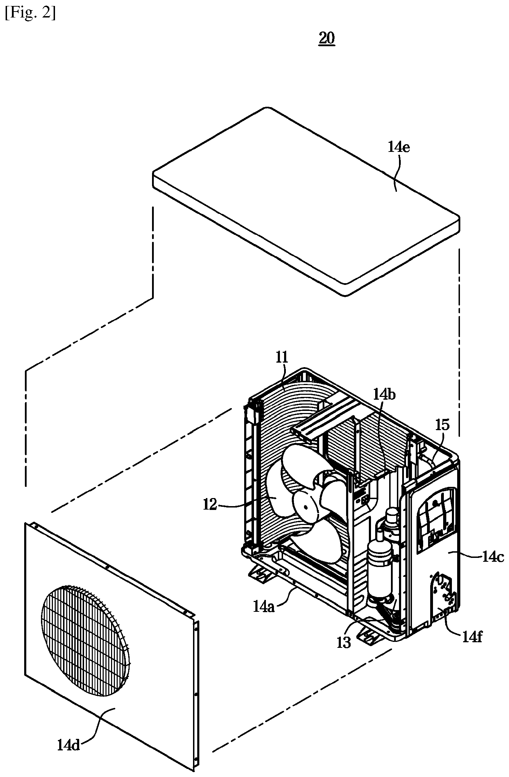

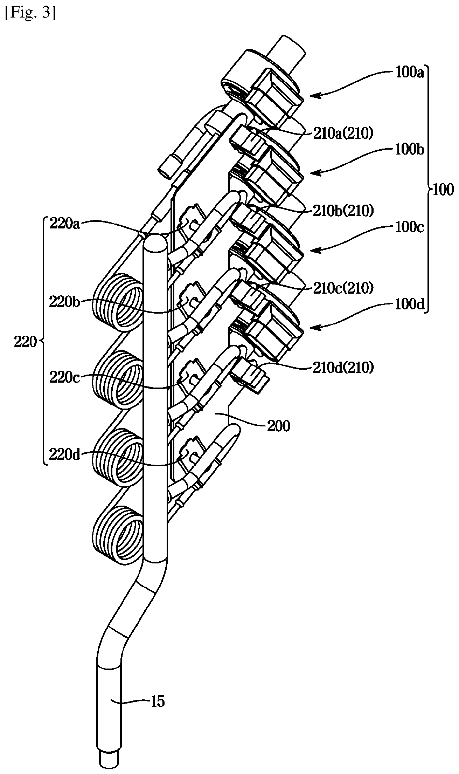

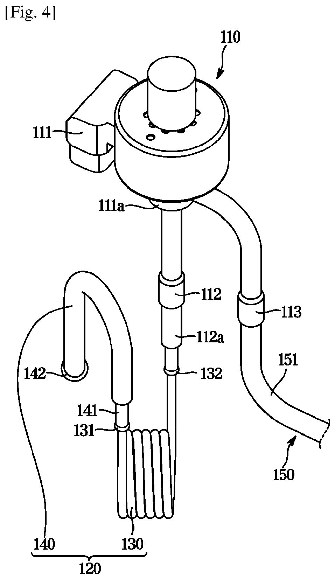

FIG. 1 is a schematic diagram of an air conditioner according to an embodiment of the invention, FIG. 2 is an exploded perspective view of an outdoor unit of the air conditioner according to an embodiment of the invention, FIG. 3 is a perspective view illustrating a state in which an expansion valve unit is fixed to a bracket in the air conditioner according to an embodiment not part of the invention, and FIG. 4 is a perspective view of the expansion valve unit in the air conditioner according to an embodiment of the invention. As illustrated in FIG. 1, an air conditioner according to an embodiment of the invention includes an indoor unit 20 arranged in an indoor space and an outdoor unit 10 arranged in an outdoor space, and the outdoor unit 10 and the indoor unit 20 are connected to each other through a refrigerant pipe 30 configured to deliver refrigerant. In addition, although not shown in the drawings, the indoor unit 20 and the outdoor unit 10 may be connected to each other through wires for transmitting power and electric signals.

A single outdoor unit 10 may be connected to the plurality of indoor units 20a and 20b through the refrigerant pipe 30. FIG. 1 illustrates an example in which a plurality of indoor units 20a and 20b is provided, but a single indoor unit 20 or three or more indoor units 20 may be connected to a single outdoor unit 10.

The indoor unit 20 includes an indoor heat exchanger (not shown) configured to exchange heat with indoor air, an indoor blower fan (not shown) configured to suck and blow indoor air to pass through the indoor heat exchanger, and an expansion valve unit 100 (refer to FIG. 3) configured to decompress and expand the refrigerant.

As illustrated in FIG. 2, the outdoor unit 10 includes a heat exchanger 11 configured to exchange heat with outdoor air, a blower fan 12 configured to suck and blow outdoor air to pass through the heat exchanger 11, a compressor 13 configured to compress the refrigerant, and a housing 14 configured to form an appearance of the outdoor unit 10 and accommodate the above mentioned heat exchanger 11, blower fan 12 and compressor 13.

Referring to FIG. 2, the housing 14 include a base plate 14a forming a lower surface of the housing to allow the heat exchanger 11 and the compressor 13 to be placed thereon, a partition 14b installed between the heat exchanger 11 and the compressor 13 to divide an inner space of the housing 14 into a space in which the outdoor heat exchanger 11 is installed and a space in which the compressor 13 is installed, a side plate 14c formed in a rectangular shape having an open front side so that an inside thereof forms a space in which the heat exchanger 11 and the compressor 13 are installed, a front plate 14d configured to cover the front side of the side plate 14c, and a top plate 14e configured to cover the upper side of the side plate 14c and the front plate 14d.

The side plate 14c includes an inlet port (not shown) through which outdoor air is sucked, and the front plate 14d includes an outlet port through which air heat-exchanged with the heat exchanger 11 is discharged back to the outdoor space.

In addition, the housing 14 includes a control box (not shown) installed on the inner surface of the side plate 14c and a valve plate 14f on which a valve (not shown), to which the refrigerant pipe 30 is connected, is installed.

The outdoor unit 10 includes a discharge pipe 15 through which the refrigerant passing through the heat exchanger 11 is discharged. The discharge pipe 15 may be formed as a part of the heat exchanger 11.

The discharge pipe 15 connects the heat exchanger 11 to the expansion valve unit 100, as illustrated in FIG. 3.

The refrigerant introduced into the expansion valve unit 100 through the discharge pipe 15 is decompressed and expanded, and then moved to the indoor unit 20 through the refrigerant pipe 30.

As illustrated in FIG. 4, the expansion valve unit 100 includes an expansion valve 110 through which the refrigerant is decompressed and expanded.

The expansion valve 110 includes a first tube 112 through which the refrigerant is introduced, a body portion 111 configured to decompress and expand the refrigerant introduced from the first tube 112, and a second tube 113 through which the decompressed and expanded refrigerant is discharged.

The expansion valve unit 100 includes a first connection portion 120 configured to connect the discharge pipe 15 to the first tube 112 and a second connection portion 150 configured to connect the second tube 113 and the refrigerant pipe 30.

The first connection portion 120 is configured to allow the refrigerant, which is heat-exchanged in the heat exchanger 11, to flow into the expansion valve 110.

The second connection portion 150 is configured to allow the refrigerant, which is expanded and decompressed by the expansion valve 110, to flow into the indoor unit 20. The first connection portion 120 includes a capillary tube 130 configured to optimize the flow rate of the refrigerant. The first connection portion 120 includes a first connection tube 140 configured to connect the capillary tube 130 to the discharge pipe 15.

One end 141 of the first connection tube 140 is connected to one end 131 of the capillary tube 130, and the first tube 112 is connected to the one end 131 of the capillary tube 130. The other end 142 of the first connection tube 140 is connected to the discharge pipe 15.

Therefore, the capillary tube 130 is arranged at the front end of the expansion valve 110 based on the flow of the refrigerant.

An auxiliary tube 112a configured to connect the first tube 112 to the capillary tube 130 may be provided between the first tube 112 and the capillary tube 130. However, the connection of the capillary tube 130 is not limited thereto, and thus the capillary tube 130 may be directly connected to the first tube 112.

The second connection portion 150 may include a second connection tube 151 configured to connect the second tube 113 to the refrigerant pipe 30.

Although not shown in the drawing, the capillary tube 130 may be included in the second connection portion 150 instead of the first connection portion 120 and thus the capillary tube may be connected to the rear end of the expansion valve 110 based on the flow of the refrigerant. That is, the capillary tube 130 may be arranged between the second tube 113 and the second connection tube 151.

In this case, the second connection portion 150 is connected to the bracket 200 as described later. However, only an embodiment in which the capillary tube 130 is included in the first connection portion 120 and arranged between the first tube 112 and the first connector tube 140 will be described.

As mentioned above, the expansion valve unit 100 includes the capillary tube 130, and the capillary tube 130 includes a thin tube, which may cause the deformation and damage of the capillary tube 130 due to an external force.

In addition, such a configuration with the expansion valve 110 is connected to the capillary tube 130 may be deformed or damaged by an external force.

"External force" includes a force that is applied from the outside of the outdoor unit 10 or vibration generated upon driving of the blower fan 12 or the compressor 13 arranged inside the outdoor unit 10.

Particularly, the capillary tube 130 may be arranged at the front end or the rear end of the expansion valve 110. The expansion valve 110 is generally formed of a metal material, and the weight of the expansion valve 110 is relatively heavy.

Accordingly, the external force formed by the weight of the expansion valve 110 is largely transmitted to the capillary tube 130 that is physically connected to the expansion valve 110, and thus the capillary tube 130 or a configuration coupled to the capillary tube 130 may be deformed or damaged.

Particularly, the expansion valve unit 100 may be arranged in a machine room formed between the partition 14b and the side plate 14c as illustrated in FIG. 2. Typically, the outdoor unit 10 of the air conditioner may be manufactured to maximize the size of the heat exchanger 11 and the blower fan 12 in order to increase the efficiency of the outdoor unit 10, and thus the space inside the machine room may be narrow.

Because the machine room is narrow, when the configuration of the expansion valve unit 100 connected to the capillary tube 130 or the capillary tube 130 is deformed, the configuration or the capillary tube 130 may be in contact with a piping structure, which is arranged adjacent to the expansion valve unit 100. Therefore, additional damage may occur and an unintentional noise caused by the contact between the components may occur.

In addition, when a plurality of indoor units 20a and 20b is connected to a single outdoor unit 10 as illustrated in FIGS. 1 to 3, a plurality of expansion valve units 100a, 100b, 100c, and 100d may be arranged in the machine room. Therefore, the expansion valve units 100a, 100b, 100c, and 100d may be in contact with each other and damage or noise may occur due to contact.

In order to ease such a difficulty, the outdoor unit 10 of the air conditioner according to an embodiment of the invention includes a bracket 200 configured to stably support the expansion valve unit, and a first coupling member 210 and a second coupling member 220 configured to couple the bracket 100 to the expansion valve unit 100.

The bracket 200 stably supports the expansion valve unit 100 to prevent the capillary tube 130 or the configuration connected to the capillary tube 130, which have the weakest rigidity against the external force, from being deformed or damaged by the external force.

The bracket 200 supports the plurality of expansion valve units 100a, 100b, 100c, and 100d, as illustrated in FIG. 3.

According to an embodiment of the invention, the bracket 200 may support four or less expansion valve units 100a, 100b, 100c, and 100d but supports at least one expansion valve unit, and the present invention is not limited thereto, and thus the bracket 200 may include five or more coupling hooks 203 and coupling holes 205, which are described later, for supporting five or more expansion valve units. However, hereinafter the bracket 200 configured to support four or less expansion valve units 100a, 100b, 100c, and 100d will be described.

Four or less expansion valve units 100a, 100b, 100c, 100d are simultaneously supported by the bracket 200 configured to support four expansion valve units 100a, 100b, 100c, and 100d, as illustrated in the drawing, but alternatively, one to three expansion valve unit among four expansion valve units 100a, 100b, 100c, 100d may be selectively supported by the bracket 200.

That is, the outdoor unit 10 may include various numbers of expansion valve units 100 according to the number of the indoor units 20 connected to the outdoor unit 10 but includes at least one expansion valve unit 100, and one expansion valve unit to four expansion valve units may be supported by a single bracket 200. The outdoor unit 10 includes a plurality of first coupling members 210a, 210b, 210c, and 210d configured to couple the plurality of expansion valve units 100a, 100b, 100c, and 100d to the bracket 200, respectively.

The outdoor unit 10 includes a plurality of second coupling members 220a, 220b, 220c, and 220d configured to couple the plurality of expansion valve units 100a, 100b, 100c, and 100d to the bracket 200, respectively.

Two fixation points fixed to the bracket 200 by the first coupling member 210 and the second coupling member 220 are formed on the expansion valve unit 100. Accordingly, the expansion valve unit 100 is stably fixed to the bracket 200.

The number of the first coupling members 210a, 210b, 210c and 210d and the number of the second coupling members 220a, 220b, 220c and 220d may be selected in accordance with the number of the expansion valve units 100a, 100b, 100c, and 100d supported by the bracket 200.

Hereinafter a structure in which the expansion valve unit 100 is coupled to the bracket 200 will be described in detail.

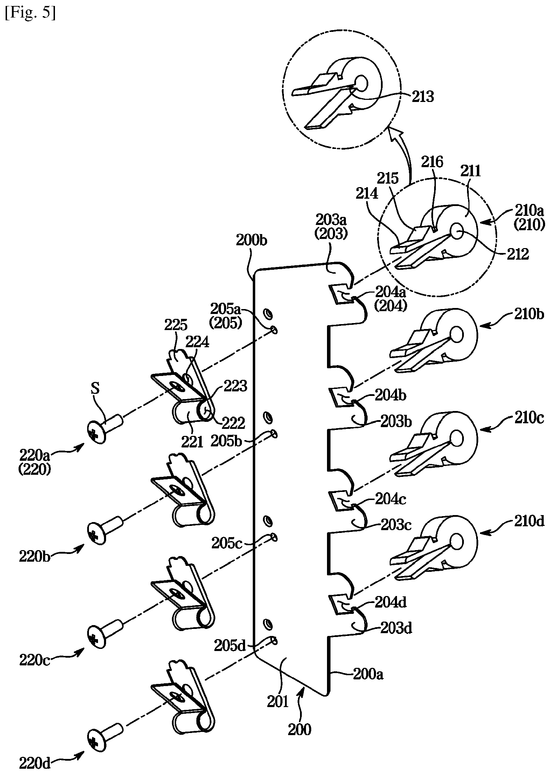

FIG. 5 is an exploded perspective view illustrating a first coupling member, a second coupling member, and the bracket in the air conditioner according to an embodiment of the invention,

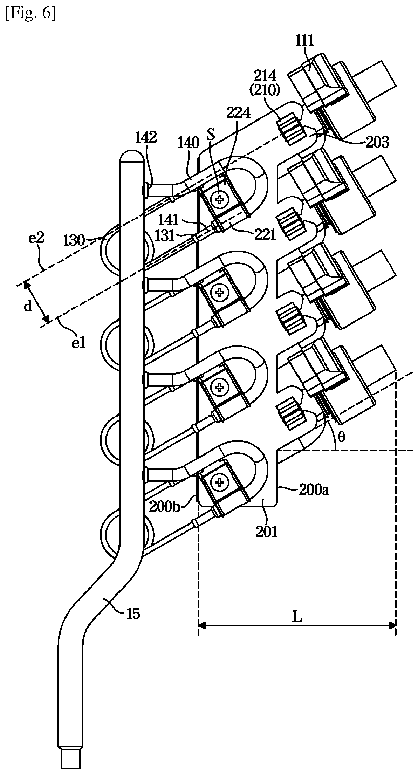

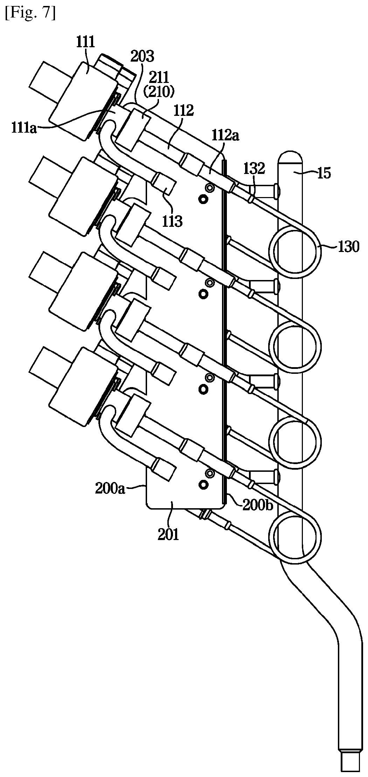

FIG. 6 is a view illustrating one surface of the bracket in a state in which the expansion valve unit is fixed to the bracket, in the air conditioner according to an embodiment of the invention, and FIG. 7 is a view illustrating the other surface of the bracket in a state in which the expansion valve unit is fixed to the bracket, in the air conditioner according to an embodiment of the invention.

The expansion valve units 100a, 100b, 100c, and 100d to be described below have the same configuration and thus any one expansion valve unit 100a among the expansion valve units 100a, 100b, 100c, and 100d will be described as an example of the expansion valve unit 100. The first coupling members 210a, 210b, 210c, and 210d to be described below have the same configuration, and thus the first coupling member 210a corresponding to one of the plurality of first coupling members 210a, 210b, 210c, and 210d will be described as an example of the first coupling member 210.

Further, the second coupling members 220a, 220b, 220c, and 220d to be described below have the same configuration, and thus the second coupling member 220a corresponding to one of the plurality of second coupling members 220a, 220b, 220c, and 220d will be described as an example of the second coupling member 220.

Four coupling hooks 203a, 203b, 203c, and 203d and four coupling holes 205a, 205b, 205c, and 205d to be described later are provided on the bracket 200 in accordance with the number of the expansion valve units 100a, 100b, 100c, and 100d.

The four coupling hooks 203a, 203b, 203c and 203d have the same configuration and the four coupling holes 205a, 205b, 205c and 205d have the same configuration. Therefore, one coupling hook 203a among the plurality of coupling hooks 203a, 203b, 203c and 203d will be described as an example of the coupling hook 203 and one coupling hole 205a among the plurality of coupling holes 205a, 205b, 205c and 205d will be described as an example of the coupling hole 205.

Further, one guide hole 206a among the plurality of guide holes 206a, 206b, 206c, and 206d to be described later will be described as an example of the guide hole 206.

As illustrated in FIGS. 5 to 7, the bracket 200. is configured to fix the expansion valve 110 and the first connection portion 120.

The expansion valve 110 is coupled by the first coupling member 210, and the first connection portion 120 may be coupled by the second coupling member 220.

Particularly, the second coupling member 220 fixes the first connection tube 140 among the first connection portion 120 to the bracket 200.

The first coupling member 210 surrounds at least a portion of the expansion valve 110 and then fixed to the bracket 200 so as to allow the expansion valve 110 to be stably supported by the bracket 200.

Particularly, the first coupling member 210 may surround a lower portion 111a of the body portion 111 of the expansion valve 110 to stably support the body portion 111 having a relatively heavy weight. However, the disclosure is not limited thereto, and the first coupling member 210 may surround other portions of the body portion 111.

Accordingly, because the body portion 111 is fixed to the bracket 200, it is possible to allow the external force, which is generated by the weight of the body portion 111, to be minimally transmitted to the first tube 112 extending from the body portion 111 and the other end 132 of the capillary tube 130, which is connected to the first tube 112.

The first coupling member 210 may include a first cutout portion 213, and a first support 211 configured to surround and support the body portion 111 inserted through the first cutout portion 213.

The first support 211 may be formed in a ring shape with one side cut off. The first cutout portion 213 may be arranged at one side of the first support 211.

A first inserting portion 212, which is a space into which the body portion 111 may be inserted, may be provided inside the first support 211.

The lower portion 111a of the body portion 111 may be inserted into the first insertion portion 212 through the first cutout portion 213, and an inner circumferential surface of the first support 211 may surround an outer circumferential surface of the lower portion 111a of the body portion 111, thereby supporting the body portion 111.

The first coupling member 210 may include a rubber material. Accordingly, a cut range of the first cutout portion 213 may be increased or decreased by an external force, and thus the body portion 111 may be easily inserted into the first insertion portion 212.

The first coupling member 210 includes a first coupling portion 214 extending from the first cutout portion 213 to the opposite side of the first support 211 and coupled to the bracket 200.

The first coupling portion 214 may be provided in a pair of protrusion shapes extending from the first cutout portion 213. The first coupling portion 214 may be hooked to an inner space 204 of the coupling hook 203 formed in the bracket 200.

As mentioned above, the first coupling member 210 includes the rubber material and the elasticity may be maintained so that the pair of protrusion shapes of the first coupling portion 214 is directed to the outside. When the pair of coupling protrusions is arranged in the inner space 204 of the coupling hook 203, the pair of coupling protrusions may be hooked to the coupling hook 203 by the elasticity.

Further, the first coupling member 210 includes a support protrusion 215 arranged on the first coupling portion 214 to prevent the first coupling member 210 from being separated from the coupling hook 203.

Because a coupling space 216 between the support protrusion 215 and the first support 211 is arranged in the inner space 204 of the coupling hook 203, it is possible to maintain a state in which the first coupling portion 214 is stably coupled to the coupling hook 203.

Because the first coupling member 210 includes the rubber material as mentioned above, it is possible to generate the anti-vibration effect against the vibration generated in the outdoor unit 10. Accordingly, the first coupling member 210 may stably couple the expansion valve unit 100 to the bracket 200, and further secure the rigidity of the expansion valve unit 100.

The second coupling member 220 includes a second support 221 configured to surround and support the first connection tube 140, a second insertion portion 222 provided inside the second support 221 and to which the first connection tube 140 is inserted, and a second cutout portion 223 formed cutout to allow the first connection tube 140 to be inserted to the second insertion portion 222.

As for the first connection tube 140, the second support 221 surrounds the vicinity of the one end 141 of the first connection tube 140 coupled to the one end 131 of the capillary tube 130.

Alternatively, the second support 221 may surround the one end 141 of the first connection tube 140 although not shown in the drawings That is, in the first connection portion 120, the one end 131 of the capillary tube 130, the one end 141 of the first connection tube 140, and the vicinity of the one end 141 of the first connection tube 140, which are a portion vulnerable to damage due to external force, are supported by the second support 221, thereby increasing the rigidity of the first connection portion 120.

In addition, as described above, the rigidity of the other end of the capillary tube 130, the first tube 112 or a portion arranged in the auxiliary tube 112a, which are another portion vulnerable to damage due to external force, in the first connection portion 120 may be increased because the first coupling member 210 stably supports the body portion 111.

The second coupling member 220 includes a second coupling portion 224 extending from the second cutout portion 223 to the opposite side of the second support 221 and coupled to the bracket 200.

The second coupling portion 224 may be screwed to the coupling hole 205 formed in the bracket 200. The second coupling portion 224 includes a pair of plates extending from the second cutout portion 223, and each plate may include a through hole 224 to which the screw S is passed through and which is coupled to the coupling hole 205.

The bracket 200 may include the guide hole 206 arranged adjacent to the coupling hole 205 and configured to guide a position at which the second coupling member 220 is coupled to the bracket 200.

As will be described later, the expansion valve unit 100 may be arranged to be inclined with respect to one end 200a or the other end 200b of the bracket 200. The guide hole 206 may guide the position of the second coupling member 220 to allow the second coupling member 220 to be coupled to the bracket 200 at an angle in consideration of an installation angle of the expansion valve unit 100.

The second coupling member 220 may include a guide protrusion 226 inserted into the guide hole 206. Particularly, the guide protrusion 226 may protrude from the second coupling portion 224, which is in contact with one surface 201 of the bracket 200, to a direction coupled to the bracket 200.

Before the second coupling member 220 is coupled to the bracket 200, the guide protrusion 226 may be inserted into the guide hole 205 of the bracket 200 so as to select the position of the second coupling member 220. Thereafter, the second coupling member 220 may be arranged at a position where the coupling hole 205 and the through hole 224 overlap each other, and the second coupling member 220 and the bracket 200 may be coupled to each other through the screw member S.

As mentioned above, the first coupling member 210 and the second coupling member 220 fix the expansion valve unit 100 to the bracket 200. Accordingly, two fixation points in the expansion valve unit 100 are fixed to the bracket 200 by the first coupling member 210 and the second coupling member 220.

Particularly, the first coupling member 210 and the second coupling member 220 increase the rigidity of the expansion valve unit 100 by fixing the low rigidity portion of the expansion valve unit 100 to the bracket 200.

The first connection tube 140 is fixed to the one surface 201 of the bracket 200 by the second coupling member 220, and the expansion valve 110 is fixed to the other surface 202 of the bracket 200, which is opposite do the one surface 201 of the bracket 200, by the first coupling member 210.

That is, the first coupling member 210 and the second coupling member 220 respectively fix the expansion valve 110 and the first connecting pipe 140 to the bracket 200 in the opposite direction.

When the first coupling member 210 and the second coupling member 220 are simultaneously coupled on the same surface of the bracket 200, a part of the expansion valve unit 100 may be deformed by the shape of the capillary tube 130. However, according the invention, because the expansion valve 110 is coupled to the other surface 202 of the bracket 200 and the first connection tube 140 is coupled to the one surface 201 of the bracket 200, the expansion valve unit 100 is easily coupled to the bracket 200 without deformation.

Alternatively, when the capillary tube 130 is arranged on the second connection portion 150 as described above, the expansion valve 110 is arranged on the one surface 201 of the bracket 200 and the second connection portion 150 is arranged on the other surface 202 of the bracket 200 by the second coupling member 220 although not shown in the drawings.

The coupling hook 203 may extend outwardly from the one end 200a of the bracket 200. The coupling hole 205 may be arranged at a portion adjacent to the other end 200b arranged in the opposite direction of the one end 200a of the bracket 200.

That is, on the same surface of the bracket 200, the coupling hook 203 and the coupling hole 205 may be arranged adjacent to opposite ends 200a and 200b, respectively.

Therefore, the expansion valve unit 100 is coupled to the bracket 200 by being constrained in a region adjacent to the one end 200a of the bracket 200 and a region adjacent to the other end 200b.

The plurality of coupling hooks 203a, 203b, 203c, and 203d and the plurality of coupling holes 205a, 205b, 205c and 205d may be arranged in a direction in which the one end 200a or the other end 200b of the bracket 200 extends.

In a single bracket 200, the plurality of expansion valve units 100a, 100b, 100c and 100d may be arranged in parallel in the longitudinal direction of the bracket 200.

Accordingly, the pipe laying in the machine room may have a simple structure and thus the inner space of the machine room may be efficiently used. Therefore, it is possible to minimize collision between components and it is possible to prevent that each expansion valve unit 100a, 100b, 100c, and 100d are damaged due to collision with each other.

The coupling hook 203 may extend outwardly at a predetermined angle θwith respect to a direction perpendicular to the extending direction of the one end 200a or the other end 200b of the bracket 200.

That is, the coupling hook 203 may extend in a direction inclined with respect to the one end 200a of the bracket 200. Accordingly, the expansion valve unit 100 may be coupled at an angle with respect to the one end 200a or the other end 200b of the bracket 200.

A length L from the other end 200b of the bracket 200 to one end of the body portion 111 of the expansion valve unit 100 when the expansion valve unit 100 is coupled to the bracket 200 in a direction inclined with respect to the one end 200a of the bracket 200 may be less than a length from the other end 200b of the bracket 200 to one end of the body portion 111 of the expansion valve unit 100 when the expansion valve unit 100 is coupled to the bracket 200 in a direction perpendicular to the one end 200a of the bracket 200.

Therefore, the length from the outermost side of the expansion valve unit 100 coupled to the discharge pipe 15 to the discharge pipe 15 may be formed relatively short, and thus it is possible to efficiently use the inner space of the machine room.

When it is assumed that a direction, in which the one end 131 of the capillary tube 130 is formed (or a direction in which one side of the capillary tube 130 including the one end 131 extends), is e1, and it is assumed that a direction, in which the other end 132 of the capillary tube 130 is formed (or a direction in which the other side of the capillary tube 130 including the other end extends), is e2, the first coupling member 210 may constrain the expansion valve 110 in the direction e2 and the second coupling member 220 may constrain the first connection tube 140 in the direction e1.

Accordingly, even when the external force is applied to a direction in which the one end 131 and the other end 132 of the capillary tube 130 are away from each other, or a direction in which the one end 131 and the other end 132 of the capillary tube 130 are close to each other, it is possible to prevent that the capillary tube 130 is deformed in the direction in which the one end 131 and the other end 132 are away from each other or close to each other.

That is, the bracket 200 supports the expansion valve 110 and the first connection tube 140 to maintain a separation distance d in a direction perpendicular to the expanding directions e1 and e2 of the one end 131 and the other end 132 of the capillary tube 130.

Because the separation distance d between the one end 131 and the other end 132 of the capillary tube 130 is maintained by the first coupling member 210 and the second coupling member 220, it is possible to prevent the capillary tube 130 from being deformed due to the external force.

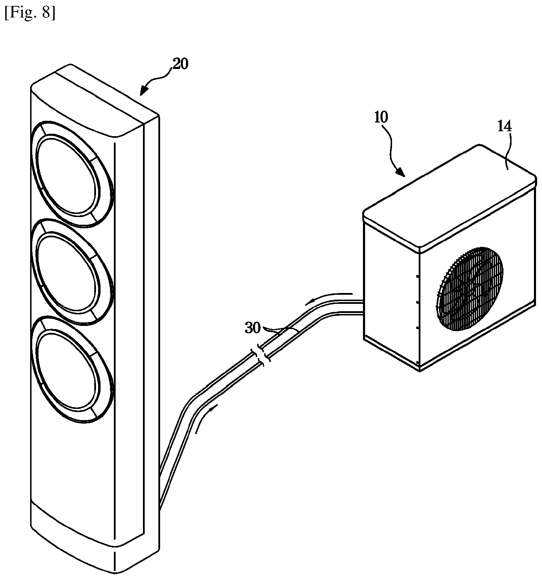

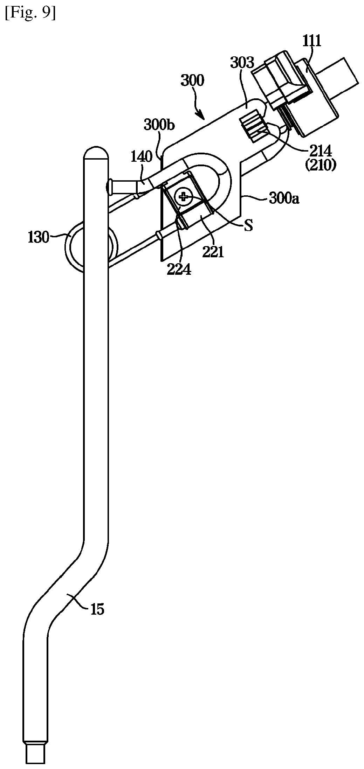

Hereinafter a bracket 300 configured to stably support the expansion valve unit 100 according to another embodiment of the invention will be described. A configuration will be described later except the bracket 300 may be the same as the configuration of the outdoor unit 10 of the air conditioner according to an embodiment and thus a description thereof will be omitted. FIG. 8 is a schematic diagram of an air conditioner according to another embodiment of the invention, and FIG. 9 is a view illustrating one surface of a bracket in a state in which an expansion valve unit is fixed to the bracket, in the air conditioner according to another embodiment of the invention.

As illustrated in FIG. 8, a single indoor unit 20 may be connected to a single outdoor unit 10. Accordingly, a single expansion valve unit 100 may be arranged in the outdoor unit 10. When a single expansion valve unit 100 is arranged in the machine room, the expansion valve unit 100 may be coupled to any one of the plurality of coupling hooks 203a, 203b, 203c and 203d and any one of the plurality of coupling holes 205a, 205b and 205c in the bracket 200.

However, unlike this, the bracket 300 according to another embodiment of the invention includes one coupling hook 303 and one coupling hole (not shown).

Accordingly, a length of one end 300a or the other end 300b of the bracket 300 may be shortened, and thus the bracket 300 may be smaller than the bracket 200 according to an embodiment of the disclosure.

Because the size of the bracket 300 is reduced, the space inside the machine room of the outdoor unit 10 may be effectively used, and thus the expansion valve unit 100 may be prevented from being damaged due to contact with other components.

In addition, although not shown in the drawings, the bracket 300 may be implemented by a bracket including two coupling hooks and two coupling holes, or three coupling hooks and three coupling holes.

That is, unlike the other embodiments of the invention, the bracket may include various numbers of coupling hooks and coupling holes.

## Claims

1. An outdoor unit (10) of an air conditioner connectable to an indoor unit (20, 20a, 20b), the outdoor unit (10) comprising:
a compressor (13);
a heat exchanger (11) configured to exchange heat between air introduced from outside and refrigerant compressed by the compressor (13);
an expansion valve unit (100) configured to decompress the refrigerant discharged from the heat exchanger (11), the expansion valve unit (100) comprising an expansion valve (110), a first connection portion (120) configured to connect the expansion valve (110) to the heat exchanger (11) and a second connection portion (150) configured to connect the expansion valve (110) to a refrigerant pipe (30), the refrigerant pipe (30) configured to deliver the refrigerant, which is decompressed and expanded by the expansion valve unit (100), to the indoor unit (20, 20a, 20b) when the indoor unit (20, 20a, 20b) is connected to the outdoor unit (10); and
a bracket (200, 300) configured to support the expansion valve unit (100) by fixing the expansion valve (110) and one of the first connection portion (120) or the second connection portion (150) to the bracket (200, 300),
**characterized in that**
the one of the first connection portion (120) or the second connection portion (150) comprises a capillary tube (130) connected to the expansion valve (110) and a connection tube (140) configured to connect the capillary tube (130) to the heat exchanger (11) or the refrigerant pipe (30), and the connection tube (140) is fixed to the bracket (200, 300),
and **in that** the expansion valve (110) is fixed to one surface (202) of the bracket (200, 300) and the connection tube (140) is fixed to the other surface (201) of the bracket (200, 300).

2. The outdoor unit (10) of the air conditioner of claim 1, wherein
the expansion valve (110) is fixed to one side of the bracket (200, 300),
wherein the one of the first connection portion (120) or the second connection portion (150) is fixed to the other side of the bracket (200, 300).

3. The outdoor unit (10) of the air conditioner of claim 1, wherein
the capillary tube (130) comprises one end (131) thereof connected to the connection tube and the other end (132, 142, 200b, 300b) thereof connected to the expansion valve (110),
wherein the bracket (200, 300) fixes the expansion valve (110) and the connection tube to maintain a separation distance in a direction perpendicular to an extending direction of the one end (131, 141, 200a) and the other end (132, 142, 200b, 300b) of the capillary tube (130).

4. The outdoor unit (10) of the air conditioner of claim 1, further comprising:
a first coupling member (210, 210a, 210b, 210c, 210d) configured to surround at least a portion (212) of the expansion valve (110) and coupled to the bracket (200, 300) so as to allow the expansion valve (110) to be coupled to the bracket (200, 300).

5. The outdoor unit (10) of the air conditioner of claim 4, wherein
the first coupling member (210, 210a, 210b, 210c, 210d) comprises a rubber material.

6. The outdoor unit (10) of the air conditioner of claim 4, wherein
the first coupling member (210, 210a, 210b, 210c, 210d) comprises a first cutout portion (213), a first support (211) configured to support at least one portion (212) of the expansion valve (110) after a lower end of the expansion valve (110) is inserted through the first cutout portion, and a first coupling portion extending from the first cutout portion and coupled to the bracket (200, 300).

7. The outdoor unit (10) of the air conditioner of claim 6, wherein
the first coupling portion (214) comprises a support protrusion (215) configured to allow the first coupling portion (214) to be supported by the bracket (200, 300) without being separated from the bracket (200, 300) after the first coupling portion (214) is inserted into the bracket (200, 300).

8. The outdoor unit (10) of the air conditioner of claim 7, wherein
the bracket (200 300) comprises a coupling hook (203a, 203b, 203c, 203d) comprising an insertion portion (212) to which the first coupling portion (214) is inserted

9. The outdoor unit (10) of the air conditioner of claim 8, wherein
the coupling hook (203a, 203b, 203c, 203d) is arranged at one side end of the bracket (200, 300).

10. The outdoor unit (10) of the air conditioner of claim 1, further comprising:
a second coupling member (220, 220a, 220b, 220c, 220d) configured to surround one of the first connection portion (120) or the second connection portion (150) and coupled to the bracket (200, 300) so as to allow the one of the first connection portion (120) or the second connection portion (150) to be coupled to the bracket (200, 300).

11. The outdoor unit (10) of the air conditioner of claim 10, wherein
the second coupling member (220, 220a, 220b, 220c, 220d) comprises a second support (221) configured to surround the one of the first connection portion (120) or the second connection portion (150) and support the one of the first connection portion (120) or the second connection portion (150), and a second coupling portion (212) coupled to the bracket (200, 300).

12. The outdoor unit (10) of the air conditioner of claim 11, wherein
the second coupling portion (212) is screwed to the bracket (200, 300),
wherein the bracket (200, 300) further comprises a coupling hole (205a, 205b, 205c, 205d) to which the second coupling portion (212) is screwed.

## Patentansprüche

1. Außeneinheit (10) einer Klimaanlage, die mit einer Inneneinheit (20, 20a, 20b) verbunden werden kann, wobei die Außeneinheit (10) Folgendes umfasst:
einen Kompressor (13);
einen Wärmetauscher (11), der so konfiguriert ist, dass er Wärme zwischen der von außen zugeführten Luft und dem durch den Kompressor (13) komprimierten Kältemittel austauscht;
eine Expansionsventileinheit (100), die so konfiguriert ist, dass sie das von dem Wärmetauscher (11) abgegebene Kältemittel dekomprimiert, wobei die Expansionsventileinheit (100) ein Expansionsventil (110), einen ersten Verbindungsabschnitt (120), der so konfiguriert ist, dass er das Expansionsventil (110) mit dem Wärmetauscher (11) verbindet, und einen zweiten Verbindungsabschnitt (150) umfasst, der so konfiguriert ist, dass er das Expansionsventil (110) mit einer Kältemittelleitung (30) verbindet, wobei die Kältemittelleitung (30) so konfiguriert ist, dass sie das Kältemittel, das durch die Expansionsventileinheit (100) dekomprimiert und expandiert wird, an die Inneneinheit (20, 20a, 20b) liefert, wenn die Inneneinheit (20, 20a, 20b) mit der Außeneinheit (10) verbunden ist; und
eine Halterung (200, 300), die so konfiguriert ist, dass sie die Expansionsventileinheit (100) stützt, indem sie das Expansionsventil (110) und eines des ersten Verbindungsabschnitts (120) oder des zweiten Verbindungsabschnitts (150) an der Halterung (200, 300) befestigt,
**dadurch gekennzeichnet, dass** der eine des ersten Verbindungsabschnitts (120) oder des zweiten Verbindungsabschnitts (150) ein Kapillarrohr (130), das mit dem Expansionsventil (110) verbunden ist, und ein Verbindungsrohr (140) umfasst, das so konfiguriert ist, dass es das Kapillarrohr (130) mit dem Wärmetauscher (11) oder der Kältemittelleitung (30) verbindet, und dass das Verbindungsrohr (140) an der Halterung (200, 300) befestigt ist,
und dadurch, dass das Expansionsventil (110) an einer Fläche (202) der Halterung (200, 300) befestigt ist und das Verbindungsrohr (140) an der anderen Fläche (201) der Halterung (200, 300) befestigt ist.

2. Außeneinheit (10) der Klimaanlage nach Anspruch 1, wobei
das Expansionsventil (110) an einer Seite der Halterung (200, 300) befestigt ist,
wobei der eine des erstes Verbindungsabschnitts (120) oder des zweiten Verbindungsabschnitts (150) an der anderen Seite der Halterung (200, 300) befestigt ist.

3. Außeneinheit (10) der Klimaanlage nach Anspruch 1, wobei
das Kapillarrohr (130) ein Ende (131) davon, das mit dem Verbindungsrohr verbunden ist, und das andere Ende (132, 142, 200b, 300b) davon, das mit dem Expansionsventil (110) verbunden ist, aufweist,
wobei die Halterung (200, 300) das Expansionsventil (110) und das Verbindungsrohr fixiert, um einen Trennungsabstand in einer Richtung senkrecht zu einer Erstreckungsrichtung des einen Endes (131, 141, 200a) und des anderen Endes (132, 142, 200b, 300b) des Kapillarrohrs (130) beizubehalten.

4. Außeneinheit (10) der Klimaanlage nach Anspruch 1, ferner umfassend:
ein erstes Kopplungselement (210, 210a, 210b, 210c, 210d), das so konfiguriert ist, dass es mindestens einen Abschnitt (212) des Expansionsventils (110) umgibt und mit der Halterung (200, 300) gekoppelt ist, um zu ermöglichen, dass das Expansionsventil (110) mit der Halterung (200, 300) gekoppelt wird.

5. Außeneinheit (10) der Klimaanlage nach Anspruch 4, wobei
das erste Kopplungselement (210, 210a, 210b, 210c, 210d) ein Gummimaterial umfasst.

6. Außeneinheit (10) der Klimaanlage nach Anspruch 4, wobei
das erste Kopplungselement (210, 210a, 210b, 210c, 210d) einen ersten Ausschnittabschnitt (213), eine erste Stütze (211), die so konfiguriert ist, dass sie mindestens einen Abschnitt (212) des Expansionsventils (110) stützt, nachdem ein unteres Ende des Expansionsventils (110) durch den ersten Ausschnittabschnitt eingeführt ist, und einen ersten Kopplungsabschnitt umfasst, der sich von dem ersten Ausschnittabschnitt erstreckt und mit der Halterung (200, 300) gekoppelt ist.

7. Außeneinheit (10) der Klimaanlage nach Anspruch 6, wobei
der erste Kopplungsabschnitt (214) einen Stützvorsprung (215) umfasst, der so konfiguriert ist, dass der erste Kopplungsabschnitt (214) von der Halterung (200, 300) gestützt werden kann, ohne von der Halterung (200, 300) getrennt zu werden, nachdem der erste Kopplungsabschnitt (214) in die Halterung (200, 300) eingesetzt wurde.

8. Außeneinheit (10) der Klimaanlage nach Anspruch 7, wobei
die Halterung (200 300) einen Kopplungshaken (203a, 203b, 203c, 203d) mit einem Einsetzabschnitt (212) aufweist, in den der erste Kopplungsabschnitt (214) eingeführt wird

9. Außeneinheit (10) der Klimaanlage nach Anspruch 8, wobei
der Kopplungshaken (203a, 203b, 203c, 203d) an einem seitlichen Ende der Halterung (200, 300) angeordnet ist.

10. Außeneinheit (10) der Klimaanlage nach Anspruch 1, die außerdem umfasst:
ein zweites Kopplungselement (220, 220a, 220b, 220c, 220d), das so konfiguriert ist, dass es einen des ersten Verbindungsabschnitts (120) oder des zweiten Verbindungsabschnitts (150) umgibt und mit der Halterung (200, 300) gekoppelt ist, so dass der eine des ersten Verbindungsabschnitts (120) oder des zweiten Verbindungsabschnitts (150) mit der Halterung (200, 300) gekoppelt werden kann.

11. Außeneinheit (10) der Klimaanlage nach Anspruch 10, wobei
das zweite Kopplungselement (220, 220a, 220b, 220c, 220d) eine zweite Stütze (221), die so konfiguriert ist, dass sie den einen des ersten Verbindungsabschnitts (120) oder des zweiten Verbindungsabschnitts (150) umgibt und den einen des ersten Verbindungsabschnitts (120) oder des zweiten Verbindungsabschnitts (150) stützt, und einen zweiten Kopplungsabschnitt (212) umfasst, der mit der Halterung (200, 300) gekoppelt ist.

12. Außeneinheit (10) der Klimaanlage nach Anspruch 11, wobei
der zweite Kopplungsabschnitt (212) mit der Halterung (200, 300) verschraubt ist,
wobei die Halterung (200, 300) ferner ein Kopplungsloch (205a, 205b, 205c, 205d) umfasst, in das der zweite Kopplungsabschnitt (212) geschraubt wird.

## Revendications

1. Unité extérieure (10) d'un climatiseur pouvant être connectée à une unité intérieure (20, 20a, 20b), l'unité extérieure (10) comprenant :
un compresseur (13) ;
un échangeur de chaleur (11) configuré pour échanger de la chaleur entre l'air introduit de l'extérieur et le réfrigérant comprimé par le compresseur (13) ;
une unité de détendeur (100) configurée pour décompresser le réfrigérant déchargé de l'échangeur de chaleur (11), l'unité de détendeur (100) comprenant un détendeur (110), une première partie de connexion (120) configurée pour connecter le détendeur (110) à l'échangeur de chaleur (11) et une deuxième partie de connexion (150) configurée pour connecter le détendeur (110) à un tuyau de réfrigérant (30), le tuyau de réfrigérant (30) étant configuré pour fournir le réfrigérant, qui est décompressé et détendu par l'unité de détendeur (100), à l'unité intérieure (20, 20a, 20b) lorsque l'unité intérieure (20, 20a, 20b) est connectée à l'unité extérieure (10) ; et
un support (200, 300) configuré pour soutenir l'unité de détendeur (100) en fixant le détendeur (110) et une de la première partie de connexion (120) ou de la deuxième partie de connexion (150) au support (200, 300),
**caractérisée en ce que** l'une de la première partie de connexion (120) ou de la deuxième partie de connexion (150) comprend un tube capillaire (130) relié au détendeur (110) et un tube de connexion (140) configuré pour connecter le tube capillaire (130) à l'échangeur de chaleur (11) ou au tuyau réfrigérant (30), et que le tube de connexion (140) est fixé au support (200, 300),
et **en ce que** le détendeur (110) est fixé à une surface (202) du support (200, 300) et le tube de connexion (140) est fixé à l'autre surface (201) du support (200, 300).

2. Unité extérieure (10) du climatiseur de la revendication 1, dans laquelle
le détendeur (110) est fixé sur un côté du support (200, 300),
dans lequel l'une de la première partie de connexion (120) ou de la deuxième partie de connexion (150) est fixée à l'autre côté du support (200, 300).

3. Unité extérieure (10) du climatiseur de la revendication 1, dans laquelle
le tube capillaire (130) comporte une extrémité (131) reliée au tube de connexion et l'autre extrémité (132, 142, 200b, 300b) reliée au détendeur (110),
dans laquelle le support (200, 300) fixe le détendeur (110) et le tube de connexion pour maintenir une distance de séparation dans une direction perpendiculaire à une direction d'extension de l'une extrémité (131, 141, 200a) et de l'autre extrémité (132, 142, 200b, 300b) du tube capillaire (130).

4. Unité extérieure (10) du climatiseur de la revendication 1, comprenant en outre :
un premier élément de couplage (210, 210a, 210b, 210c, 210d) configuré pour entourer au moins une partie (212) du détendeur (110) et couplé au support (200, 300) de manière à permettre au détendeur (110) d'être couplé au support (200, 300).

5. Unité extérieure (10) du climatiseur de la revendication 4, dans laquelle
le premier élément de couplage (210, 210a, 210b, 210c, 210d) comprend un matériau de caoutchouc.

6. Unité extérieure (10) du climatiseur de la revendication 4, dans laquelle
le premier élément de couplage (210, 210a, 210b, 210c, 210d) comprend une première partie découpée (213), un premier support (211) configuré pour supporter au moins une partie (212) du détendeur (110) après qu'une extrémité inférieure du détendeur (110) a été insérée à travers la première partie découpée, et une première partie de couplage s'étendant à partir de la première partie découpée et couplée au support (200, 300).

7. Unité extérieure (10) du climatiseur de la revendication 6, dans laquelle
la première partie de couplage (214) comprend une saillie de support (215) configurée pour permettre à la première partie de couplage (214) d'être supportée par le support (200, 300) sans être séparée du support (200, 300) après que la première partie de couplage (214) a été insérée dans le support (200, 300).

8. Unité extérieure (10) du climatiseur de la revendication 7, dans laquelle
le support (200 300) comprend un crochet de couplage (203a, 203b, 203c, 203d) comprenant une partie d'insertion (212) dans laquelle la première partie de couplage (214) est insérée

9. Unité extérieure (10) du climatiseur de la revendication 8, dans laquelle
le crochet de couplage (203a, 203b, 203c, 203d) est disposé à une extrémité latérale du support (200, 300).

10. Unité extérieure (10) du climatiseur de la revendication 1, comprenant en outre :
un deuxième élément de couplage (220, 220a, 220b, 220c, 220d) configuré pour entourer une de la première partie de connexion (120) ou de la deuxième partie de connexion (150) et couplé au support (200, 300) de manière à permettre à l'une de la première partie de connexion (120) ou de la deuxième partie de connexion (150) d'être couplée au support (200, 300).

11. Unité extérieure (10) du climatiseur de la revendication 10, dans laquelle
le deuxième élément de couplage (220, 220a, 220b, 220c, 220d) comprend un deuxième support (221) configuré pour entourer l'une de la première partie de connexion (120) ou de la deuxième partie de connexion (150) et soutenir l'une de la première partie de connexion (120) ou de la deuxième partie de connexion (150), et une deuxième partie de couplage (212) couplée au support (200, 300).

12. Unité extérieure (10) du climatiseur de la revendication 11, dans laquelle
la deuxième partie ce couplage (212) est vissée au support (200, 300),
le support (200, 300) comprend en outre un trou de couplage (205a, 205b, 205c, 205d) auquel la deuxième partie de couplage (212) est vissée.
